# EUROPEAN PATENT SPECIFICATION

(11) **EP 1 007 826 B1**
(45) Date of publication and mention of the grant of the patent: **12.03.2003**
(21) Application number: 98939746.8
(22) Date of filing: 19.08.1998
(51) Int. Cl.: F01N 3/20, F02D 41/02

(54) **IMPROVEMENTS RELATING TO CATALYSTS FOR SURFUR REMOVAL**
VERBESSERUNGEN AN KATALYSATOREN ZUR ENTSCHWEFELUNG
AMELIORATIONS CONCERNANT DES CATALYSEURS POUR LA DESULFATATION

(30) Priority: 28.08.1997 GB 9718059
(43) Date of publication of application: 14.06.2000
(73) Proprietor: JOHNSON MATTHEY PUBLIC LIMITED COMPANY, London SW1Y 5BQ (GB)
(72) Inventor: ANDERSEN, Paul, Joseph, Norristown, PA 19401 (US); BALLINGER, Todd, Howard, Audubon, PA 19403 (US); LAFYATIS, David, Scott, Frazer, PA 19355 (US); RAJARAM, Raj, Rao, Slough SL3 7PH (GB); WALKER, Andrew, Peter, Wallingford OX10 8HY (GB)
(74) Representative: Wishart, Ian Carmichael
(86) International application number: PCT/GB98/02483
(87) International publication number: WO 99/011910

(56) References cited:
- EP-A- 0 580 389
- DE-A- 19 522 165
- PATENT ABSTRACTS OF JAPAN vol. 012, no. 409 (M-758), 28 October 1988 & JP 63 150441 A (TOYOTA MOTOR CORP), 23 June 1988
- PATENT ABSTRACTS OF JAPAN vol. 096, no. 008, 30 August 1996 & JP 08 093456 A (NISSAN MOTOR CO LTD), 9 April 1996

## Description

The present invention relates to an apparatus for and method of removing sulfur from a three-way catalyst in an exhaust system of a gasoline-fuelled internal combustion engine, which engine, in use, operates substantially under stoichiometric conditions.

The use of catalytic converters, is very well established in the automobile industry in view of the exhaust gas emission regulations which are in force in most countries. The most common catalysts use a platinum group metal ("PGM") especially one or more of Pt, Pd and Rh, carried on an oxidic high surface area washcoat which is one or more of Al₂O₃, CeO₂, ZrO₂ including mixed oxides thereof or the like. The support for the catalyst is generally a low pressure-drop flow-through honeycomb manufactured from an extruded ceramic, e.g. cordierite, or from a metal honeycomb.

Gasoline contains varying amounts of sulfur depending upon its origins and the amount and type of refining it has been subjected to. Sulfur is a well-known poison of catalyst activity in such catalysts. We believe that the deactivating effect of sulfur may be due to adsorption on either the precious metal or on the support. We have found that sulfur may be removed by increasing the temperature of the catalyst, but that under lean operating conditions, that is when the overall composition of the exhaust gases leaving the engine is oxidising, the temperature required for sulfur removal is higher than under rich conditions. Indeed, we have found that for certain catalysts, the minimum temperature for sulfur removal is 625°C under lean conditions. This temperature is higher than the catalyst would normally be exposed to in its usual under-floor position mounted on the automobile.

EP 580389 (Toyota) discloses the removal of SOx from a NOx absorbent-type catalyst which is used to treat the exhaust gases from a lean-burn gasoline internal combustion engine, by decreasing the oxygen concentration in the exhaust gases, thus making them rich. That is, SOx is being removed from the NOx absorbent by chemical means. JP 4161251 (Mitsubishi) teaches the removal of SOx from a catalyst for a lean-burn internal combustion engine such as a diesel engine, by heating the catalyst to 450-800°C. It is plain from the drawings that significant heating is required (600°C for 1 hour) in order to return to approximately the S-free conversion. Heating at 500°C for 2 hours did not give such good results. Most diesel fuels have a much higher S content than gasoline.

In one embodiment, US patent no. 5657625 (Mitsubishi) describes an exhaust system for a lean-burn gasoline engine including a NOx-trap and a downstream three-way catalyst (TWC), secondary air supply means upstream of the NOx trap and an engine control unit for controlling a method of removing NOx adsorbing reducing substances, such as sulfur, from the NOx trap at periodic intervals, e.g. every 1000km. It is clear that the method is not performed until the NOx-trap has warmed up to a normal operating temperature and the composition of the exhaust gas over the catalyst during sulfur removal is 1 ≥ λ, so that sulfur is removed as H₂S.

We have now discovered that it is possible to remove sulfur from an underfloor TWC under lean exhaust gas conditions.

According to one aspect, the invention provides a vehicle including a gasoline-fuelled internal combustion engine, which engine, in normal use, operates substantially under stoichiometric conditions and includes an exhaust system comprising a three-way catalyst (TWC) mounted under-floor, means for introducing secondary air into the exhaust system upstream of the underfloor TWC and an engine management system programmed, when in use, to initiate an operating condition at least once every time the engine is used wherein the exhaust gas is enriched with CO and/or hydrocarbon (HC) and secondary air is introduced thereby to cause an exotherm by oxidation of the CO and/or HC for raising the underfloor TWC temperature to at least 625°C, whereby sulfur on the underfloor TWC is removed, wherein the composition of the exhaust gas over the underfloor TWC during sulfur removal is lean.

According to a further aspect, the invention provides the use of a vehicle according to claim 1 for removing sulfur during cold start.

According to a further aspect, there is provided the use of a vehicle according to the invention for removing sulfur for a pre-set time during normal use.

CO and/or HC enrichment of the exhaust gas is typically performed by adjusting the air-to-fuel ratio of the engine in the state of the art, HC enrichment can also be obtained by supplementary fuel addition into the exhaust gas stream.

A preferred underfloor TWC for use in this first embodiment incorporates palladium and ceria. A more preferred underfloor TWC is one having ambient temperature CO oxidation activity, as described in our WO 96/39576 and EP 0747581.

In a first embodiment of the invention, the exhaust system operates by intermittently oxidising CO and/or HC by the addition of a secondary air supply just upstream of the underfloor TWC. The engine management system is designed to initiate a condition in which the exhaust gas is enriched with CO and/or HC, and secondary air is added. Accordingly, the exotherm from such oxidation raises the underfloor TWC temperature.

The first embodiment of the present invention may be operated in several different ways. In a first method, especially when using the preferred underfloor TWCs, the engine management system provides a very rich cold start. Oxidation of CO and unburnt HC species (using the secondary air supply) on the underfloor TWC immediately begins to raise the underfloor TWC temperature to a temperature at which sulfur removal under lean conditions takes place, that is above 625°C. More preferably, the rich cold start is continued to bring the underfloor TWC to a temperature of 800-850°C or higher, in order to remove virtually all sulfur species from the underfloor TWC.

A second method, which may be combined with the first, utilises a periodic enrichment to, for example, an air/fuel ratio of 10-14 for a pre-set time, for example 5-100 seconds, during normal running, combined with secondary air addition. The underfloor TWC will already be at a normal operating temperature of at least 400°C and therefore does not require as much chemical energy to raise its temperature to an effective sulfur-removal temperature as does the first embodiment which begins at ambient temperature. In such a second method, the period between initiations of the high temperature may be pre-set in the engine management system memory, or may be variable according to operating conditions and/or either the sulfur content of the fuel, e.g. as sensed, or some form of feed-back of sulphidation of the underfloor TWC.

A modification of this second method arises in a preferred embodiment in which the underfloor TWC is supplemented by another TWC, preferably in a close-coupled position upstream of the underfloor TWC, close to the engine. The close-coupled TWC is mounted upstream of the secondary air inlet. This offers particular benefits in that during the high temperature phase, NOx reduction on the underfloor TWC is less effective (because of the lean condition due to secondary air addition), but the close-coupled TWC, which is exposed to the enriched engine-out condition, can still provide NOx removal.

A second embodiment of the present invention utilises, in addition to oxidative heating as in the first embodiment, electric resistive heating of the underfloor TWC. This may be effected by directly heating the underfloor TWC or by positioning an electric heating element upstream of the underfloor TWC.

Electrically heated catalysts have been proposed to speed light-off of catalysts upon start-up from cold but because of the high power requirements, have not met with general acceptance. In this embodiment it is envisaged that electric heating will be initiated during operation of the engine, when the underfloor TWC is already at its operating temperature. Accordingly, the power required to reach the desired temperature according to the present invention is comparatively low, and since the time for reaching the desired temperature is not so important, the total power required in this embodiment need not exceed the power that can be provided by the vehicle's on-board generation capacity, e.g. the engine's alternator. An electrically heated catalyst as proposed in the art requires a second battery, with consequential design, engineering and weight costs. We are not aware of any prior proposal which contemplates electric heating of a catalyst in a gasoline-powered vehicle at any point during normal operation of the engine.

It will be appreciated that the actual conditions, time periods and other parameters relevant to sulfur removal depend upon the engine and emission system design and general operating conditions, as well as the results desired, and may be determined by conventional optimisation.

The first embodiment of the invention is believed to offer particular advantages with the preferred underfloor TWCs mentioned above, and permits the maintenance of low temperature light-off capability.

The invention will now be described by way of example only.

### EXAMPLE 1

### Preparation of Pd/CeO₂ Catalyst

Commercially available CeO₂ particles were impregnated using tetra-amine palladium hydrogen carbonate solution so that the PGM content was 8%Pd by weight. This was then coated onto a 400 cells per square inch (62 cells/cm²) monolith at a loading of 3g/in³ (0.18g/cm³).

### EXAMPLE 2

### Experimental Evaluation Protocols

In order to test catalysts on a micro reactor, the following evaluation procedures were adopted.

### Test 1 Protocol

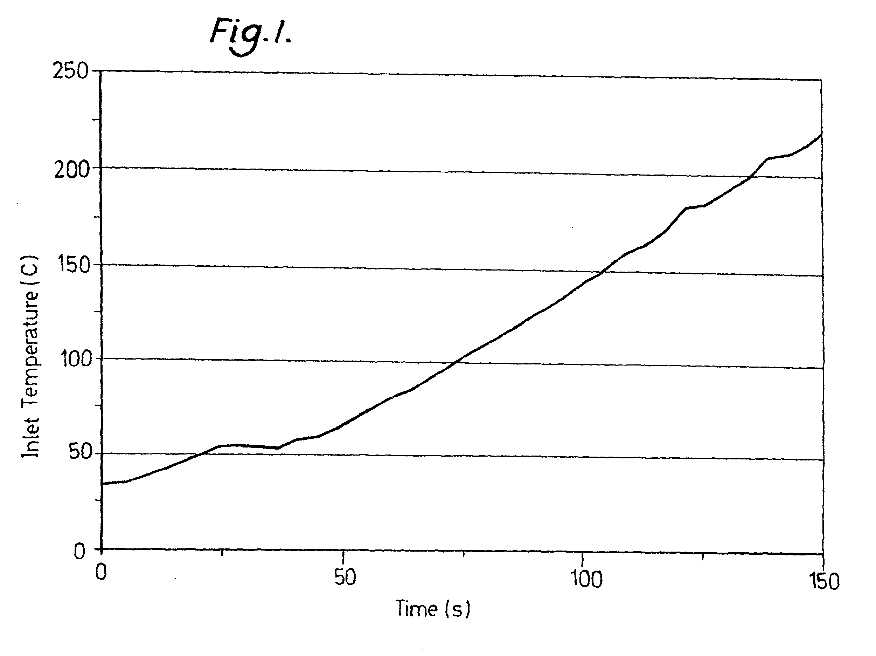

Prior to experiment, the catalyst is heated to 425°C in a stream of argon with 5%O₂. The catalyst is then cooled to ambient temperature in this stream. Temperature ramp at the catalyst inlet starts at time=0 from ambient temperature, as shown in Figure 1. At time=0, the following species are also fed to the reactor (GHSV=30,000);
500ppm NO
600ppm C₃H₆
15%CO₂
10%H₂O
4% CO

Evaluation is performed by measuring the average CO conversion during the first 20 seconds of the experiment (while the catalyst inlet temperature is still below 50°C).

### Test 2 Protocol

Prior to experiment, the catalyst is heated to 425°C in a stream of argon with 5%O₂. The catalyst is then cooled to ambient temperature in this stream. Temperature ramp at the catalyst inlet starts at time=0 from ambient temperatures, as shown in Figure 1. At time=0, the following species are also fed to the reactor (GHSV=30,000)
15% CO₂
4% CO

Evaluation is performed by measuring the average CO conversion during the first 20 seconds of the experiment (while the catalyst inlet temperature is still below 50°C).

This test protocol is somewhat less stringent than the Test 1 protocol, because there are fewer inhibiting species present in the feed.

For a series of further tests, catalysts were aged by exposure to a variety of gases and conditions. The gas concentrations for tests 1A to 1E are specified in the Table 1 below, the balance being N₂, under the conditions specified below for the various tests.

**TABLE 1**

| Test | C₃H₆ | NOx | SO₂ | O₂ | CO₂ | CO |
|---|---|---|---|---|---|---|
| 1A | 600ppm | 500ppm | 0ppm | 4% | 15% | 1.5% |
| 1B | 600ppm | 500ppm | 5ppm | 4% | 15% | 1.5% |
| 1C | 600ppm | 500ppm | 5ppm | 11% | 15% | 8.5% |
| 1D | 600ppm | 500ppm | 5ppm | 11% | 15% | 9%/1.5% cycles |
| 1E | 600ppm | 500ppm | 5ppm | 11% | 15% | 9%/1.5% cycles |

### EXAMPLE 3

### Examples 1A, 1B and 1C: Steady-State Ageing Condition

Three identical catalyst samples were aged in a micro-reactor under lean conditions in feeds containing CO, O₂, CO₂, C₃H₆, NO at a GHSV of 100,000 and at a catalyst inlet temperature of 350°C for 14 hours. In Example 1A, the feed contained 1.5%CO and 4%O₂, and the temperature measured in the catalyst bed was 435°C.

In Example 1B, the feed contained 1.5%CO, 4%O₂ and 5ppm SO₂, and the temperature measured in the catalyst bed was 435°C.

In Example 1C, the feed contained 8.5%CO, 11%O₂ and 5ppm SO₂, and the temperature measured in the catalyst bed was 860°C.

Table 2 shows the resulting catalyst performance following these steady-state ageing conditions.

**TABLE 2**

| Sample (ageing conditions) | %CO Conversion Protocol 1 | %CO Conversion Protocol 2 |
|---|---|---|
| 1A (low temperature, no SO₂) | 97% | not tested |
| 1B (low temperature, with SO₂) | not tested | 0% |
| 1C (high temperature, with SO₂) | 86% | not tested |

As can be seen from these results, low temperature ageing in the absence of SO₂ (Sample 1A) leaves a catalyst with excellent levels of low temperature CO oxidation activity in the stringent test protocol 1. However, the addition of sulfur to the feed during this low temperature ageing (sample 1B) completely removes all of this low temperature activity. This is caused by sulfur poisoning of the active sites. The deleterious effect of sulfur on the catalyst activity is negated, however, when the ageing is performed at elevated temperature (as in sample 1C). This is because the sulfur does not adsorb onto the catalyst under these conditions.

### EXAMPLE 4

### Examples 1D and 1E - Cycled Ageing Condition

The above Example shows that by keeping the catalyst continually hot (>800°C) under normal lean operation the catalyst can maintain its excellent low temperature activity. However, under real driving conditions it may be more practical (*i.e.* fuel-efficient) to expose the catalyst to high temperature conditions only on a periodic basis.

Two more catalysts were aged in the micro reactor under lean conditions in feeds containing CO, O₂, CO₂, C₃H₆, NO and 5ppm SO₂ at a GHSV of 100,000 and at a catalyst inlet temperature of 350°C for 14 hours. In both ageings, the oxygen concentration was held at 11%.

In Example D: the catalyst was aged under cyclic conditions with a 300-second period;

| | |
|---|---|
| 100 seconds | 9% CO, bed temperature ≈ 880°C; |
| 200 seconds | 1.5%CO, bed temperature ≈420°C; |

In Example 1E: the catalyst was aged under cyclic conditions with a 1000-second period;

| | |
|---|---|
| 100 seconds | 9%CO, bed temperature ≈ 800°C; |
| 900 seconds | 1.5%CO, bed temperature ≈ 430°C. |

Table 3 shows the evaluation results following these cycled ageing conditions.

**TABLE 3**

| | | |
|---|---|---|
| Sample | %CO Conversion Protocol 1 | %CO Conversion Protocol 2 |
| 1D | 71% | 91% |
| 1E | 38% | 62% |

Table 3 shows that high levels of low temperature CO activity are retained by the catalysts following such a cycled ageing protocol. It is also worth noting that using mass spectrometry, SO₂ was identified leaving the catalyst during the high temperature portions of these cycles. Thus, such a cycled ageing protocol may be used to deliberately remove sulfur and enhance the activity of such catalysts.

## Claims

1. A vehicle including a gasoline-fuelled internal combustion engine, which engine, in normal use, operates substantially under stoichiometric conditions and includes an exhaust system comprising a three-way catalyst (TWC) mounted under-floor, means for introducing secondary air into the exhaust system upstream of the underfloor TWC and an engine management system programmed, when in use, to initiate an operating condition at least once every time the engine is used wherein the exhaust gas is enriched with CO and/or hydrocarbon (HC) and secondary air is introduced thereby to cause an exotherm by oxidation of the CO and/or HC for raising the underfloor TWC temperature to at least 625°C, whereby sulfur on the underfloor TWC is removed, wherein the composition of the exhaust gas over the underfloor TWC during sulfur removal is lean.

2. A vehicle according to claim 1, wherein the CO and/or HC exhaust gas enrichment is by operating the engine under a rich air-to-fuel ratio, preferably from between 10 and 14.

3. A vehicle according to claim 1 or 2, wherein the exhaust system comprises a further TWC in a close-coupled position to the engine upstream of the means for introducing secondary air.

4. A vehicle according to claim 1, 2 or 3, wherein the exhaust system further comprises an electrically heated element for heating the catalyst directly or positioned upstream of the underfloor TWC.

5. A vehicle according to claim 4, wherein the engine management system is programmed, when in use, to operate the electrically heated element only when the underfloor TWC is at its normal operating temperature.

6. A vehicle according to any preceding claim, wherein the underfloor TWC comprises palladium and ceria.

7. The use of a vehicle according to any preceding claim for removing sulfur during cold-start.

8. The use of a vehicle according to any of claims 1 to 6, for removing sulfur for a pre-set time during normal use.

9. The use according to claim 8, wherein the pre-set time is for from 5-100 seconds.

10. The use according to claim use according to any of claims 7 to 9, wherein the air-to-fuel ratio of the engine during sulfur removal is from 10-14.

11. The use according to any of claims 7 to 10, further comprising electric resistive heating of the underfloor TWC.

## Patentansprüche

1. Fahrzeug, das einen Benzin-betriebenen Verbrennungsmotor enthält, der bei der normalen Verwendung im wesentlichen unter stöchiometrischen Bedingungen betrieben wird und ein Abgassystem enthält, das aufweist einen Drei-Wege-Katalysator (TWC), der unter dem Fahrzeugboden befestigt ist, eine Einrichtung zur Einführung von Sekundärluft in das Abgassystem stromaufwärts von dem Unterflur-TWC und ein Motorsteuerungssystem, das so programmiert ist, dass durch seine Verwendung mindestens einmal immer wenn der Motor in Gang gesetzt wird, solche Betriebsbedingungen initiiert werden, bei denen das Abgas an CO und/oder Kohlenwasserstoff (HC) angereichert wird und Sekundärluft eingeführt wird, um dadurch eine Exothermie durch Oxidation von CO und/oder HC hervorzurufen zur Erhöhung der Unterflur-TWC-Temperatur auf mindestens 625 °C, wodurch der Schwefel auf dem Unterflur-TWC entfernt wird, wobei die Zusammensetzung des Abgases über dem Unterflur-TWC während der Schwefel-Entfernung mager ist.

2. Fahrzeug nach Anspruch 1, worin die CO- und/oder HC-Abgasanreicherung erzielt wird durch Betreiben des Motors mit einem reichen Luft/Kraftstoff-Verhältnis, vorzugsweise zwischen 10 und 14.

3. Fahrzeug nach Anspruch 1 oder 2, worin das Abgassystem einen weiteren TWC in einer eng an den Motor angekuppelten Position stromaufwärts von der Einrichtung zur Einführung von Sekundärluft umfasst.

4. Fahrzeug nach Anspruch 1, 2 oder 3, worin der Abgasstrom außerdem ein elektrisch beheiztes Element zum Erhitzen des Katalysators aufweist, das direkt am Katalysator oder stromaufwärts von dem Unterflur-TWC angeordnet ist.

5. Fahrzeug nach Anspruch 4, worin das Motorsteuerungssystem so programmiert ist, dass es bei der Verwendung das elektrisch beheizte Element nur dann in Betrieb setzt, wenn sich der Unterflur-TWC unter normalen Betriebsbedingungen befindet.

6. Fahrzeug nach irgendeinem vorhergehenden Anspruch, worin der Unterflur-TWC Palladium und Cerdioxid umfasst.

7. Verwendung eines Fahrzeugs nach irgendeinem vorhergehenden Anspruch zur Entfernung von Schwefel während des Kaltstarts.

8. Verwendung eines Fahrzeugs nach irgendeinem der Ansprüche 1 bis 6 zur Entfernung von Schwefel für eine vorgegebene Zeitspanne während des Normalbetriebs.

9. Verwendung nach Anspruch 8, worin die vorher eingestellte Zeitspanne 5 bis 100 s beträgt.

10. Verwendung nach einem der Ansprüche 7 bis 9, worin das Luft/Kraftstoff-Verhältnis des Motors während der Schwefel-Entfernung 10 bis 14 beträgt.

11. Verwendung nach irgendeinem der Ansprüche 7 bis 10, die außerdem umfasst das Widerstandserhitzen des Unterflur-TWC.

## Revendications

1. Véhicule comportant un moteur à combustion interne à essence, lequel moteur, en utilisation normale, agit sensiblement dans des conditions stoechiométriques et comprend un système d'échappement comportant un catalyseur trois voies (TWC) monté en dessous du plancher, des moyens pour introduire de l'air secondaire dans le système d'échappement en amont du TWC situé en dessous du plancher et un système de gestion de moteur programmé, lorsqu'il est en utilisation, pour déclencher des conditions de fonctionnement au moins une fois à chaque fois que le moteur est utilisé, dans lequel les gaz d'échappement sont enrichis en CO et/ou en hydrocarbures (HC) et de l'air secondaire est introduit de manière à provoquer une réaction exothermique par oxydation du CO et/ou des HC pour monter la température du TWC situé en dessous du plancher à au moins 625°C, de sorte que le soufre situé sur le TWC situé en dessous du plancher soit enlevé, la composition des gaz d'échappement au-dessus du TWC situé en dessous du plancher pendant un enlèvement du soufre étant pauvre.

2. Véhicule selon la revendication 1, dans lequel l'enrichissement des gaz d'échappement en CO et/ou en HC est obtenu par actionnement du moteur dans un rapport air-carburant riche, de préférence compris entre 10 et 14.

3. Véhicule selon la revendication 1 ou 2, dans lequel le système d'échappement comporte un autre TWC qui est dans une position en lien étroit avec le moteur en amont des moyens destinés à introduire de l'air secondaire.

4. Véhicule selon la revendication 1, 2 ou 3, dans lequel le système d'échappement comporte de plus un élément chauffé électriquement pour chauffer directement le catalyseur ou positionné en amont du TWC situé sous le plancher.

5. Véhicule selon la revendication 4, dans lequel le système de gestion de moteur est programmé, lorsqu'il est en utilisation, pour actionner l'élément chauffé électriquement uniquement lorsque le TWC situé sous le plancher est à sa température de fonctionnement normale.

6. Véhicule selon l'une quelconque des revendications précédentes, dans lequel le TWC situé sous le plancher est constitué de palladium et d'oxyde de cérium.

7. Utilisation d'un véhicule selon l'une quelconque des revendications précédentes pour enlever le soufre pendant un démarrage à froid.

8. Utilisation d'un véhicule selon l'une quelconque des revendications 1 à 6, pour enlever du soufre pendant un temps préétabli lors d'une utilisation normale.

9. Utilisation selon la revendication 8, dans laquelle le temps préétabli est de 5 à 100 secondes.

10. Utilisation selon l'une quelconque des revendications 7 à 9, dans laquelle le rapport air-carburant du moteur pendant un enlèvement de soufre est de 10 à 14.

11. Utilisation selon l'une quelconque des revendications 7 à 10, comportant de plus un chauffage par résistance du TWC situé sous le plancher.
